# FASCICULE DE BREVET EUROPEEN

(11) **EP 2 681 048 B1**
(45) Date de publication et mention de la délivrance du brevet: **17.09.2014**
(21) Numéro de dépôt: 12712310.7
(22) Date de dépôt: 01.03.2012
(51) Int. Cl.: B32B 38/10, B41F 16/00, B32B 38/06

(54) **MACHINE DE TRANSFERT A CHAUD ET SOUS PRESSION D'UNE COUCHE DE PROTECTION D'UN SUBSTRAT ET PROCÉDÉ ASSOCIÉ**
VORRICHTUNG ZUM ÜBERTRAGEN EINER SCHUTZSCHICHT FÜR EIN SUBSTRAT BEI HOHER TEMPERATUR UND UNTER DRUCK SOWIE ZUGEHÖRIGES VERFAHREN
MACHINE FOR TRANSFERRING A PROTECTIVE LAYER FOR A SUBSTRATE AT HIGH TEMPERATURE AND UNDER PRESSURE, AND ASSOCIATED METHOD

(30) Priorité: 01.03.2011 FR 1151634
(43) Date de publication de la demande: 08.01.2014
(73) Titulaire: Astea, 77600 Bussy-Saint-Georges (FR); Hologram Industries, 77607 Marne La Vallee Cedex 3 (FR)
(72) Inventeur: OLIVEIRA, José, F-94350 Villiers Sur Marne (FR); PUSTEL, André, F-94170 Le Perreux Sur Marne (FR)
(74) Mandataire: Thomas, Nadine
(86) Numéro de dépôt international: PCT/FR2012/050435
(87) Numéro de publication internationale: WO 2012/117208

(56) Documents cités:
- EP-B1- 1 201 426
- WO-A1-95/04657

## Description

### DOMAINE TECHNIQUE DE L'INVENTION

L'invention se rapporte au domaine du transfert à chaud et sous pression de couche ou film dits de transfert sur des substrats tels que des supports papier.

Plus précisément l'invention a trait au transfert d'au moins une couche destinée à la protection d'un support tel qu'un document officiel d'identification. La couche en elle-même est préférentiellement transparente et peut comporter intrinsèquement des éléments optiques de sécurité tels que des hologrammes ou autres éléments d'information devant être scellés sur le support officiel.

### ETAT DE LA TECHNIQUE ANTERIEURE

Dans ce domaine de nombreuses techniques existent depuis fort longtemps et évoluent techniquement dans le temps afin de rendre le document (ou substrat) final aussi infalsifiable que possible.

On connait des techniques de laminage à chaud qui se divisent essentiellement en deux catégories. La première utilise deux cylindres tournants l'un presseur et l'autre chauffant entrainant entre eux le substrat et le film protecteur.

Cette technique nécessite des équipements de type laminateurs à rouleaux où l'adhésion du film protecteur sur le substrat (passeport par exemple) est réalisée le long de la génératrice de contact entre les deux cylindres grâce à la chaleur amenée par le cylindre chauffant et à la pression du deuxième cylindre. Cette unique ligne de contact induit des cadences de production relativement lentes si l'on souhaite une adhésion de bonne qualité. De plus la qualité de l'adhésion n'est pas optimale car la contre-pression appliquée ne permet pas une bonne pénétration de l'adhésif dans l'épaisseur c'est-à-dire dans la fibre du papier (lorsque le substrat est constitué de papier).Une amélioration de cette technique consiste à multiplier le nombre de paires de cylindres en contact mais bien entendu ceci a un coût que les industriels ne sont pas prêts à supporter. L'encombrement est un autre inconvénient de cette technique.

La demanderesse a déposé une demande de brevet française FR 2 889 482 portant sur une amélioration de cette technique selon laquelle un unique tambour est prévu au centre du dispositif, et une pluralité de moyens presseurs sont disposés autour ; le tambour ou les presseurs sont chauffants. L'inconvénient d'un tel dispositif réside en ce que le substrat est courbé lorsqu'il est chauffé ce qui peut poser problème ensuite lors de son refroidissement ; des plis peuvent se former ; de plus ce type de laminateur est obligatoirement destiné au laminage de documents comportant de manière intrinsèque un laminat et il ne permet pas l'utilisation de films de laminage en bobines. De plus la courbure associée à la pression des cylindres ou galets presseur peut, dans le cas d'application d'un passeport électronique, endommager les composants RFID (Radio Fréquency IDentification) tels que puce ou antenne inclus dans ledit passeport.

Une deuxième technique de laminage consiste à presser à chaud par placage entre deux mâchoires, le substrat et le film protecteur. Le document WO 95/04657 décrit un dispositif de ce type qui comprend un organe de pressage dont la surface est inférieure à l'organe conjugué, dit semelle. Ce dispositif ne comprend pas de moyens de séparation du film vis-à-vis du support ; le seul moyen techniquement équivalent consiste en l'application d'une tension suffisante sur le film lui-même. C'est donc une force parallèle à la surface du substrat (document) et du film de transfert qui est ici mise en jeu pour cette fonction de séparation du film de transfert vis-à-vis du laminat.

La plupart des laminats qui servent au transfert d'une couche (ou film) de protection sur un substrat (ou document) sont initialement constitués d'un empilage de couches ou films : un film porteur en PET ou matière équivalente, une couche dite de détachement de type cire, une couche de protection (mécanique ou chimique) de type vernis, une couche de colle qui adhère sur le substrat à protéger. De façon optionnelle entre la couche de protection et la couche de colle peuvent être interposées une couche comportant une image de type hologramme et/ou une couche transparente de haut indice optique. Bien entendu suite au transfert, le film porteur et la couche de détachement sont éloignées du substrat, en général rembobinées sur une bobine spécifique ; elles ne sont pas réutilisables.

### EXPOSE DE L'INVENTION

L'invention vise à remédier aux inconvénients de l'état de la technique et notamment à proposer un équipement selon lequel le transfert est rapide ; dont le cout est modeste notamment par le faible nombre de moyens mis en oeuvre ; qui permet un collage efficace sur de grandes surfaces, qui préserve la brillance du document.

Pour ce faire est proposé selon un premier aspect de l'invention une machine de transfert à chaud et sous pression selon la revendication 1.

De façon plus précise, lesdits moyens de détachement du substrat comprennent au moins un élément de type couteau disposé perpendiculairement à la direction de défilement du laminat, et constitué d'au moins une arête définie par l'intersection d'un premier plan parallèle au plan des mâchoires et d'un second plan orienté vis-à-vis dudit premier plan de telle sorte que que l'arête soit saillante. Ce sont ainsi des forces de cisaillement translaminaires c'est-à-dire perpendiculaires au plan du laminat qui permettent le détachement du substrat auquel est collé la couche de transfert, vis-à-vis du reste du laminat.

Par ailleurs,l'élément de type couteau est disposé à proximité longitudinale de l'un des bords de l'une des mâchoires et il est disposé vis-à-vis desdits moyens de déplacement ou desdits moyens de guidage du laminat de façon à dévier le laminat au niveau de ladite arête vive d'un angle compris entre environ 45° et 90°.

Cet arrangement particulier permet au substrat muni de sa couche de protection de se détacher quasi naturellement, par son propre poids, du film porteur. Le nombre de pièces mises en mouvement est réduit, ce qui rend la machine particulièrement simple et fiable.

En outre, selon un mode de réalisation particulier, lesdits moyens pour déplacer le laminat de part et d'autre de la position de transfert comprennent deux cylindres dont l'un est motorisé, entre lesquels est déplacé ledit laminat qui est entrainé par contact par l'un au moins desdits cylindres.

Ce sont donc ces déplacements alternatifs, dans deux sens opposés qui permettent de décoller une première puis une deuxième zone du substrat vis-à-vis du film porteur.

De façon avantageuse, la surface totale dudit substrat correspond sensiblement à la surface commune de la première et de la deuxième mâchoire placées en vis-à-vis. La surface de transfert peut donc être importante, du même ordre de grandeur que celle du substrat.

De façon intéressante, la machine comprend en outre au moins une cellule destinée à repérer la position dudit laminat vis-à-vis du substrat avant le transfert. Ladite cellule coopère avec des moyens de commande du déplacement et/ou de la tension du laminat ; ceci permet un positionnement précis du laminat vis-à-vis du substrat avant le transfert.

Par ailleurs, la machine selon l'invention comprend en outre des moyens de réglage du chauffage de l'une au moins desdites mâchoires, en température et/ou en durée.

Selon l'invention, la machine comprend en outre des moyens de réglage de la pression d'application entre la première et la deuxième mâchoire.

De façon caractéristique la machine comprend en outre des moyens de contrôle et/ou de réglage de la vitesse de défilement dudit laminat. Ainsi plusieurs vitesses de défilement du laminat sont possibles : rapide pour un approche globale du substrat ; lente pour un positionnement plus précis.

Sans sortir du cadre de l'invention, la surface de l'une au moins desdites mâchoires placée en vis-à-vis de l'autre surface est munie de bossages et/ou protubérances et/ou creux. Des utilisations particulières, plus sophistiquées, peuvent nécessiter ces éléments afin de renforcer le niveau de sécurisation ou encore de créer des zones tactiles.

Par « surface de l'une au moins des mâchoires » on entend la surface elle-même de l'une des mâchoires ou encore la surface d'une plaque fixée et détachable vis-à-vis de l'une des mâchoires.

Par ailleurs, la surface de l'une au moins desdites mâchoires placée en vis-à-vis de l'autre surface peut présenter des zones fonctionnelles spécifiques.

La présente invention concerne en outre un procédé de transfert à chaud et sous pression entre une première et une deuxième mâchoire, d'au moins une couche dite de transfert faisant initialement partie d'un laminat initialement enroulé autour d'une première bobine, sur un substrat essentiellement plat caractérisé en ce qu'il consiste à détacher par cisaillement ladite couche une fois collée audit substrat, le détachement étant obtenu par un déplacement alternatif dudit substrat vis-à-vis d'une arête saillante d'au moins deux éléments disposés de part et d'autre desdites mâchoires en contact avec ledit laminat qui, après le transfert, est enroulé autour d'une deuxième bobine.brève description des figures

### BREVE DESCRIPTIONS DES FIGURES

D'autres caractéristiques, détails et avantages de l'invention ressortiront à la lecture de la description qui suit, en référence aux figures annexées, qui illustrent :
- la figure 1, une vue de face d'une machine de transfert selon un mode de réalisation de l'invention ;
- la figure 2, une vue de face de ladite machine au cours d'une 2^{ème} étape du procédé de transfert ;
- la figure 3, une vue de face de ladite machine au cours d'une 3^{ème} étape du procédé de transfert ; et
- la figure 4, une vue de face d'une plaque ou mâchoire plate constitutive d'une presse selon un mode de réalisation de l'invention.

Pour plus de clarté, les éléments identiques ou similaires sont repérés par des signes de référence identiques sur l'ensemble des figures.

### DESCRIPTION DETAILLEE D'UN MODE DE REALISATION

De façon classique et connue la machine de transfert selon l'invention comprend essentiellement : une presse constituée d'une première 1 et d'une deuxième 2 mâchoires disposées respectivement l'une au-dessus de l'autre et qui s'étendent chacune dans un plan horizontal ou sensiblement horizontal. L'une au moins des mâchoires est chauffante ; selon le mode de réalisation préféré c'est la mâchoire supérieure 1 qui est chauffante. Bien entendu les éléments et connexions utiles à la fonction de chauffage ne sont pas ici détaillées car de la pratique courante de l'homme de métier. De façon préférée l'invention prévoit des moyens de réglage du chauffage, en température et/ou en durée. L'homme de métier choisira un réglage en fonction du cas de figure envisagé, notamment selon la nature des matériaux, leur épaisseur.

Par mâchoire on entend une plaque plate faisant partie du bâti de la machine, ou encore une plaque spécifique additionelle fixée sur une telle plaque plate. Dans le cas d'une plaque spécifique, cette dernière peut être changée aisément, en fonction des besoins et contraintes de l'utilisateur.

Les mâchoires 1, 2 sont mobiles l'une par rapport à l'autre, ici verticalement, entre une première position ménageant un espace entre elles et une deuxième position où leurs surfaces en vis-à-vis sont en contact. La première position correspond à une étape de mise en place ou de retrait du substrat plat, tandis que la deuxième position correspond à un collage du laminat 10 sur le substrat 100.

Comme il sera explicité plus en détail ci-après, et de façon intéressante, la surface totale du substrat 100 à protéger correspond sensiblement à la surface de contact commune entre la première 1 et la deuxième 2 mâchoire.

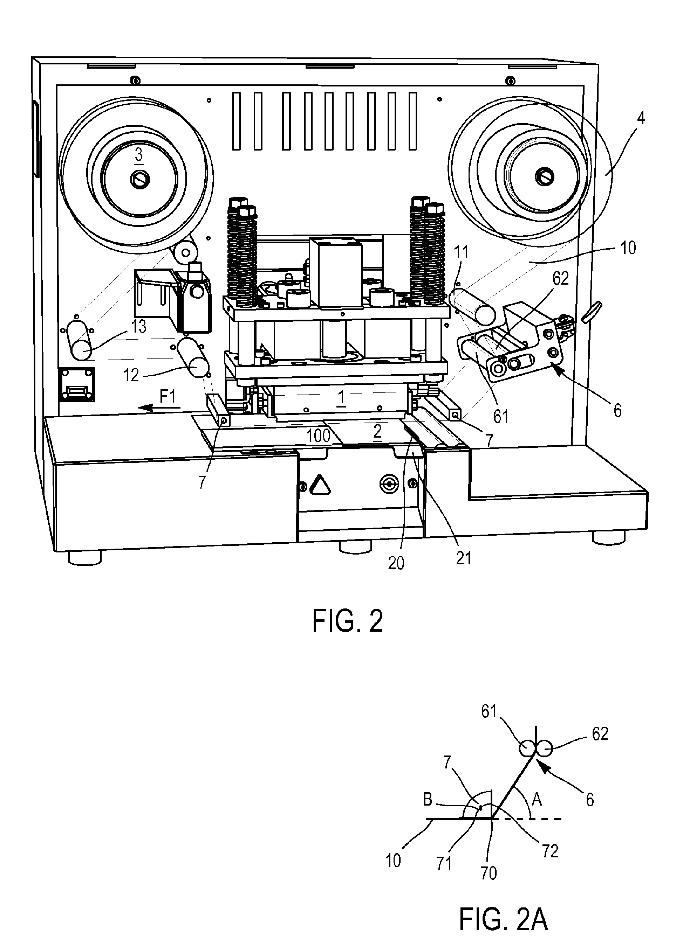

La mâchoire inférieure 2 peut comprendre des moyens 20, 21 pour positionner et guider le substrat 100, tel que visible sur la figure 2.

De façon optionnelle des rouleaux 22 peuvent être longitudinalement juxtaposés à la mâchoire inférieure 2 afin de faciliter la translation du substrat de part et d'autre de la mâchoire 2.

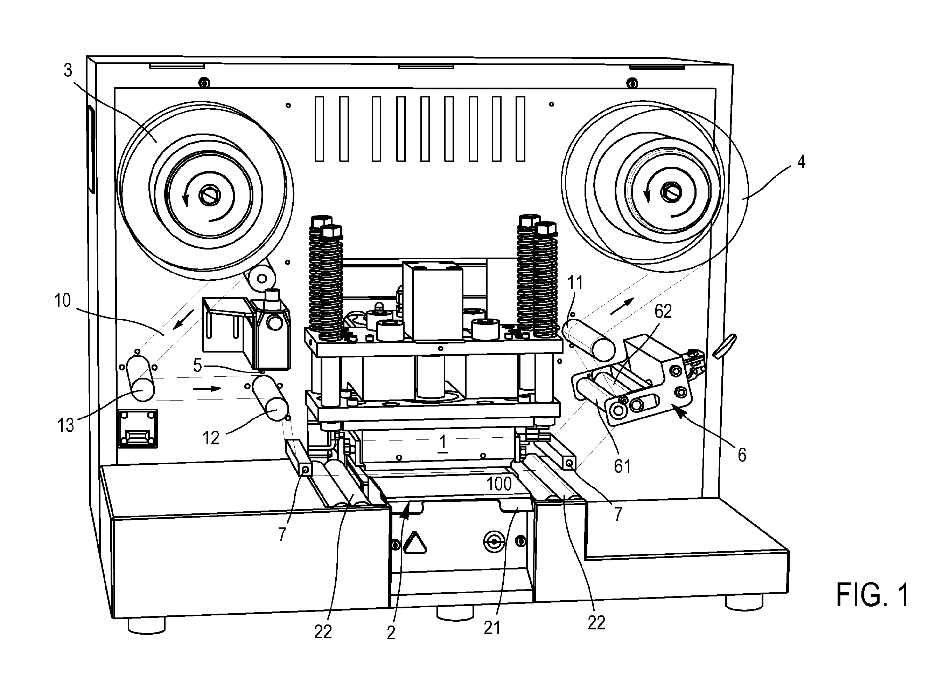

L'invention prévoit par ailleurs des moyens de réglage de la pression d'application de la première mâchoire 1 contre la deuxième mâchoire 2. L'homme de métier adaptera la pression en fonction du cas d'espèce. A titre illustratif la pression entre lesdites mâchoires est d'environ 9 kg/cm2 pour des ressorts de rappel associés (non référencés mais visibles sur la figure 1 par exemple), ici au nombre de quatre, qui présentent chacun une raideur de l'ordre de 25 Kg/cm.

De plus pour certaines applications spécifiques il peut être intéressant de créer des substrats dont tout ou partie de la surface n'est pas lisse mais présente des irrégularités de surface. Par exemple on peut chercher à graver sur une surface du substrat des signes en braille ou tout autre marquage ayant un effet tactile ou optiquement variable. Pour ce faire la surface de l'une au moins des mâchoires 1, 2 sera munie de bossages. Selon une autre alternative ayant le même effet technique, une plaque gravée peut être fixée sur l'une des mâchoires, de préférence mais non nécessairement sur la mâchoire 1 dite supérieure. Comme on le verra plus loin cette caractéristique peut être un obstacle pour le décollement du film de protection vis-à-vis du laminat après le transfert puisque les surfaces en contact sont plus importantes.

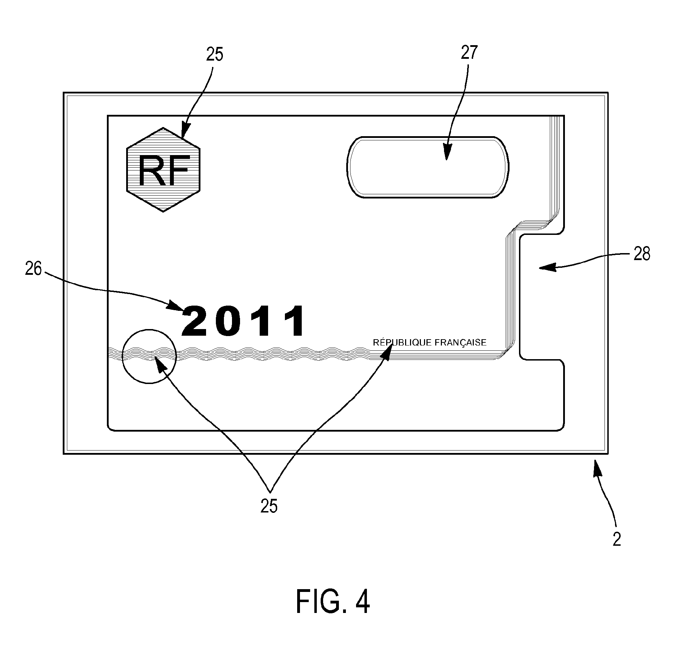

La figure 4 illustre de façon particulière et plus précise, l'une des mâchoire 2 (ou plaque) munie en surface de différentes zones spécifiques : par exemple au moins une zone 25 est prévue et munie de gaufrages consistant en des protubérances associés à des creux. Protubérances et creux sont définis par rapport à la surface plane de ladite mâchoire 2. Ces irrégularités de surface sont par exemple obtenues par gravure de la plaque 2, sur une épaisseur comprise entre 10 et 200 micromètres, de préférence entre 20 et 100 micromètres. Les gravures peuvent prendre toutes formes adaptées aux besoins ; la figure 4 montre ainsi plusieurs lignes ondulées de gaufrage, ainsi que des lettres et symboles.

Par ailleurs l'une au moins des mâchoires 1, 2 peut présenter un autre type de zones fonctionnelles spécifiques, à savoir des zones dite de réserve : par exemple une zone 26 est prévue de telle sorte qu'aucun transfert ne puisse y être opéré. Ainsi il est possible de changer à volonté les inscriptions prévues dans une telle zone. Une autre zone fonctionnelle 27 peut permettre de ménager un espace pour une signature ou pour laisser apparent un gaufrage initialement présent sur le substrat 100. Sans sortir du cadre de l'invention encore une autre zone fonctionnelle 28 peut être prévue afin de caler ou repérer visuellement la couche de transfert vis-à-vis du substrat 100.

En outre, une première bobine 3 est prévue afin d'enrouler et de stocker le laminat avant le transfert. Cette bobine 3 est motorisée ; sa vitesse de rotation est commandée par une unité interne de sorte que l'on puisse avoir par exemple une première vitesse de défilement de la bande de laminat, par exemple pour dérouler en mode rapide la bobine afin d'aller chercher une image appartenant au laminat ; une deuxième vitesse de rotation est prévue pour dérouler en mode lent le laminat afin, en liaison avec un détecteur 5 de position du laminat, de positionner de façon précise le laminat 10 vis-à-vis du substrat avant tout transfert.

Une deuxième bobine 4 est prévue et destinée à permettre l'enroulement du support du laminat 10 après le transfert. Selon les figures illustratives la deuxième bobine 4 est placée à la même hauteur que la première bobine 3, à l'opposée de la bobine 3. Ceci est une disposition parmi d'autres, qui n'a rien de limitatif.

Comme on le voit sur les différentes figures, le laminat 10 s'étend entre la première et la deuxième bobine selon un cheminement notamment défini par des moyens de guidage et de tension, constitués de cylindres 11, 12, 13. Ce cheminement est bien entendu choisi par l'homme de métier en fonction de contraintes d'encombrement, d'orientation et autres.

De façon particulièrement intéressante, la machine comprend en outre des moyens 6 pour déplacer le laminat 10 longitudinalement et horizontalement, sur une distance donnée, de part et d'autre de la position de transfert. Plus précisément les moyens 6 comprennent un premier cylindre 61 et un deuxième cylindre 62 entre lesquels passe le laminat 10, dans le NIP ainsi formé. Le NIP assure un positionnement extrêmement précis, en évitant les glissements relatifs du substrat vis-à-vis des cylindres. L'un des cylindres est motorisé, l'autre pas nécessairement. Le laminat étant en tension et en contact avec les cylindres 61, 62, la rotation de l'un des cylindres entraine le laminat en translation, dans un sens ou dans l'autre selon le sens de rotation des cylindres 61, 62. La flèche F1 sur la figure 2 illustre une translation dans un sens tandis que la flèche F2 montre une translation dans le sens opposé, comme il sera explicité ci-après.

Par ailleurs la machine selon l'invention comprend des moyens mécaniques pour détacher le substrat revêtu de la couche de transfert vis-à-vis du laminat. Ces moyens se présentent ici sous la forme de pièces 7 de type couteaux, disposés perpendiculairement à la longueur ou direction de défilement du laminat ; Les figures représentent les pièces 7 en forme de barre de section transversale carrée ; ceci est un mode de réalisation de l'invention qui fonctionne correctement. D'autres formes de pièces dites de détachement sont envisageables sans sortir du cadre de l'invention.

Ainsi il apparait opportun que l'une desdites pièces 7 présente une arête vive 70 définie par l'intersection d'un premier plan (ou paroi) 71 parallèle au plan des mâchoires 1, 2 et d'un deuxième plan (ou paroi) 72 orienté vis-à-vis du premier plan 71 de telle sorte que l'arête 70 soit saillante. L'angle B entre les premier 71 et deuxième 72 plans est préférentiellement compris entre 20° et 90°.

La ou chaque pièce 7 est disposée à proximité longitudinale de l'un des bords (le bord transversal) des mâchoires 1, 2. Selon le mode préféré représenté sur les figures 1 à 3, deux pièces 7 sont prévues, disposées de part et d'autre des mâchoires 1, 2, de telle sorte que le laminat 10 passe au-dessous du premier plan 71 de chaque pièce 7. Entre les deux pièces 7 le laminat 10 s'étend horizontalement.

En outre l'une des deux pièces 7 est disposé vis-à-vis des moyens 6 de telle sorte que le laminat est dévié au niveau de l'arête vive 70 de la pièce 7, d'un angle A compris entre 45° et 90°. Cet angle doit permettre une déviation nette et franche du laminat à ce niveau.

Ainsi comme le montrent successivement les figures 1, 2 et 3 : le substrat 100 est d'abord posé sur l'une des mâchoires 2 comme le montre la figure 1. Le laminat s'étend alors horizontalement entre la première 1 et la deuxième mâchoire 2. Les deux pièces 7 délimitent le parcours horizontal du laminat. On vient alors rapprocher la première mâchoire 1 de la deuxième mâchoire 2, puis les presser l'une contre l'autre tout en chauffant l'une des mâchoires 1, 2. Le transfert à chaud et sous pression est ainsi opéré, préférentiellement sur toute la surface du substrat qui correspond à la surface de contact des mâchoires 1, 2 selon un mode avantageux mais non obligatoire de l'invention.

Les mâchoires 1, 2 sont éloignées l'une de l'autre et l'on comprend que le substrat 100 colle entièrement au laminat 10.

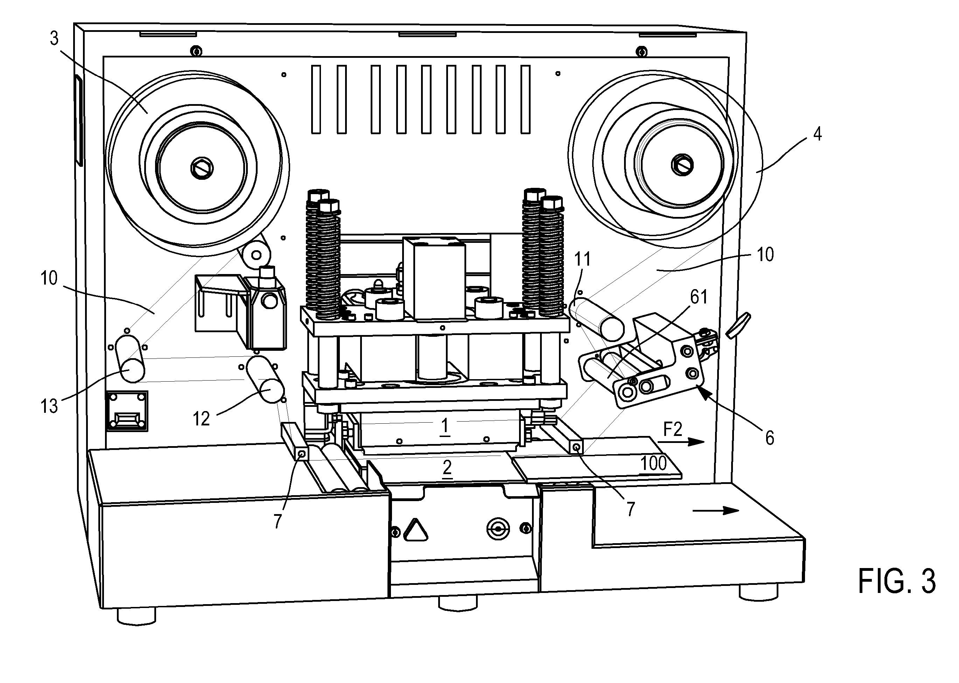

Il s'agit alors de détacher le film porteur vis-à-vis des couches de protection ou autres maintenant collées sur le substrat 100. Pour ce faire on commande une rotation de l'un des cylindres 61 ou 62 de la pièce 6, ce qui entraine une translation du laminat 10, selon la flèche F1 comme le montre la figure 2. Ce mouvement déplace le substrat 100 jusqu'à ce qu'il dépasse d'une première longueur la pièce 7 placée à proximité. Vue l'orientation quasi verticale du laminat 10 au-delà de la pièce 7 et l'arête vive 70 associée, on obtient un détachement du substrat 100 sur la longueur qui dépasse au-delà de l'arête vive 70. On poursuit le processus en commandant la rotation de l'un des cylindres 61 ou 62 dans le sens opposé à celui de l'étape précédente. Ceci amène le substrat dans la positon illustrée par la figure 3 où celui-ci dépasse (selon la flèche F2) de la deuxième pièce 7 sur une deuxième longueur. De la même façon sur cette longueur le substrat 100 sera séparé du laminat 10.

Selon les réglages, la première et la deuxième longueur cumulées peuvent correspondre à tout ou partie de la longueur totale du substrat. Les mouvements alternatifs du substrat, auquel est collé le laminat, à l'aplomb du deuxième plan 72 de la pièce 7, permettent la rupture de la couche de détachement du laminat par les forces de cisaillement qui y sont appliquées. Les passages alternatifs du laminat à l'aplomb du deuxième plan 72 permettent la rupture par cisaillement de la couche de détachement du laminat. On crée ainsi une rupture franche des couches par l'application d'une force perpendiculaire au plan du laminat. Ces forces sont appelées translaminaires dans le domaine. Il est courant et connu que des forces de cisaillement dites interlaminaires c'est-à-dire parallèles au plan du laminat, permettent un détachement des couches. Ici, de manière nouvelle et inattendue, ce sont des forces orientées perpendiculairement au plan du laminat qui créent le détachement.

Suite à cette étape de détachement, seuls le film porteur et la couche de détachement constituent le laminat 10; la couche de transfert adhère alors totalement au substrat 100 qui tombe par gravité par exemple sur la mâchoire 2. Dans tous les cas, le substrat 100 se détache de lui-même , de son propre poids, vis-à-vis du laminat 10. Il tombe sur la mâchoire 2 ou sur les cylindres 22 disposés directement au-dessous.

Aucun moyen mobile n'est utilisé pour obtenir ce détachement, de sorte que le processus est très fiable. Aucun moyen de déplacement spécifique du substrat n'est prévu, ce qui diminue le nombre de pièces nécessaires au fonctionnement de la machine.

La durée de transfert est assez courte, de l'ordre de 2 à 3 secondes ; un chauffage compris entre 100 et 150°C est suffisant pour réaliser le transfert d'un vernis épais de quelques micromètres sur un papier (substrat) présentant une épaisseur inférieure à 1 millimètre. La couche de colle présente une épaisseur de 8 à 10 micromètres. La machine selon l'invention permet donc un transfert statique en ce sens qu'à la fois le document et le substrat sont immobilisés pendant la durée du transfert. Le fait que le document soit bien immobilisé pendant le transfert permet un meilleur calage et un meilleur positionnement.

En outre on réalise un réglage précis du chauffage, de l'ordre de 1/10 °C grâce à des composants électriques appropriés. La machine selon l'invention peut avantageusement comprendre un moyen empêchant le transfert si une température minimale, dite de consigne, n'est pas atteinte au niveau de la première ou de la deuxième mâchoire.

C'est donc une combinaison intéressante de moyens tels que le ou les couteaux 7 et de déplacements spécifiques du laminat 10 qui permettent non seulement de transférer un film de protection de façon efficace sur un substrat 100, mais encore de détacher ledit film collé au substrat vis-à-vis du laminat 10, d'une manière simple et fiable.

## Revendications

1. Machine de transfert à chaud et sous pression d'au moins une couche dite de transfert constitutive d'un laminat multicouches, ladite couche de transfert étant notamment destinée à la protection d'un substrat plat (100), comprenant :
• une presse constituée d'une première (1) et d'une deuxième (2) mâchoires plates disposées horizontalement et mobiles verticalement l'une par rapport à l'autre entre une première position ménageant un espace entre elles et une deuxième position où leurs surfaces en vis-à-vis sont en contact, l'une au moins desdites mâchoires étant chauffante
• au moins une première bobine (3) motorisée autour de laquelle est initialement enroulé ledit laminat, une deuxième bobine (4) autour de laquelle s'enroule ledit laminat après le transfert
• des moyens (11, 12, 13) de guidage et de contrôle de la tension dudit laminat entre ladite première et ladite deuxième bobine
• des moyens motorisés pour le déplacement relatif de l'une desdites première ou deuxième mâchoire, entre ladite première et ladite deuxième position
**caractérisée en ce qu'**elle comprend en outre : des moyens (6) pour déplacer le laminat longitudinalement et horizontalement sur une distance donnée de part et d'autre d'une position de transfert; et des moyens mécaniques (7) disposés de part et d'autre desdites mâchoires pour détacher ledit substrat revêtu de ladite couche de transfert vis-à-vis du laminat, de telle sorte que ce sont des forces orientées perpendiculairement au plan du laminat qui créent ledit détachement.

2. Machine selon la revendication 1 **caractérisée en ce que** lesdits moyens de détachement du substrat comprennent au moins un élément de type couteau (7) disposé perpendiculairement à la direction de défilement du laminat, et constitué d'au moins une arête (70) définie par l'intersection d'un premier plan (71) parallèle au plan des mâchoires et d'un second plan (72) orienté vis-à-vis du premier plan de telle sorte que l'arête soit saillante.

3. Machine selon la revendication 2 **caractérisée en ce que** l'élément de type couteau (7) est disposé à proximité longitudinale de l'un des bords de l'une des mâchoires (1, 2) et **en ce qu'**il est disposé vis-à-vis desdits moyens de déplacement ou desdits moyens de guidage du laminat de façon à dévier le laminat au niveau de ladite arête d'un angle compris entre environ 45° et 90°.

4. Machine selon l'une quelconque des revendications précédentes **caractérisée en ce que** lesdits moyens pour déplacer le laminat de part et d'autre de la position de transfert comprennent deux cylindres (61, 62) dont l'un est motorisé, entre lesquels est déplacé ledit laminat qui est entrainé par contact par l'un au moins desdits cylindres.

5. Machine selon la revendication 1 **caractérisée en ce que** la surface totale dudit substrat correspond sensiblement à la surface commune de la première et de la deuxième mâchoires placées en vis-à-vis.

6. Machine selon l'une quelconque des revendications précédentes **caractérisée en ce qu'**elle comprend en outre au moins une cellule (5) destinée à repérer la position dudit laminat vis-à-vis du substrat avant le transfert.

7. Machine selon la revendication 6 **caractérisée en ce que** ladite cellule (5) coopère avec des moyens de commande du déplacement et/ou de la tension du laminat.

8. Machine selon l'une quelconque des revendications précédentes **caractérisée en ce qu'**elle comprend en outre des moyens de réglage du chauffage de l'une au moins desdites mâchoires, en température et/ou en durée.

9. Machine selon l'une quelconque des revendications précédentes **caractérisée en ce qu'**elle comprend en outre des moyens de réglage de la pression d'application entre la première et la deuxième mâchoire.

10. Machine selon l'une quelconque des revendications précédentes **caractérisée en ce qu'**elle comprend en outre des moyens de contrôle et/ou de réglage de la vitesse de défilement dudit laminat.

11. Machine selon l'une quelconque des revendications précédentes **caractérisée en ce que** la surface de l'une au moins desdites mâchoires placée en vis-à-vis de l'autre surface est munie de bossages (25) et/ou protubérances et/ou creux.

12. Machine selon l'une quelconque des revendications précédentes **caractérisée en ce que** la surface de l'une au moins desdites mâchoires placée en vis-à-vis de l'autre surface présente des zones fonctionnelles spécifiques (26, 27).

13. Procédé de transfert à chaud et sous pression entre une première et une deuxième mâchoire, d'au moins une couche dite de transfert faisant initialement partie d'un laminat initialement enroulé autour d'une première bobine, sur un substrat essentiellement plat **caractérisé en ce qu'**il consiste à détacher par cisaillement ladite couche une fois collée audit substrat, le détachement étant obtenu par un déplacement alternatif dudit substrat vis-à-vis d'une arête saillante d'au moins deux éléments disposés de part et d'autre desdites mâchoires en contact avec ledit laminat qui, après le transfert, est enroulé autour d'une deuxième bobine.

## Patentansprüche

1. Maschine zum Warmübertragen unter Druck mindestens einer so genannten Übertragungsschicht, die Bestandteil eines mehrschichtigen Laminats ist, wobei die Übertragungsschicht insbesondere zum Schutz eines flachen Substrats (100) gedacht ist, umfassend:
- eine Presse, die aus einer ersten (1) und einer zweiten (2) flachen Backe besteht, die waagerecht angeordnet und zwischen einer ersten Position, die dazwischen einen Zwischenraum freilässt, und einer zweiten Position, in der ihre sich gegenüberliegenden Oberflächen in Berührung stehen, senkrecht im Verhältnis zueinander beweglich sind, wobei mindestens eine der Backen heizend ist,
- mindestens eine erste motorisierte Spule (3), um die herum das Laminat anfänglich gewickelt ist, und eine zweite Spule (4), um die sich das Laminat nach der Übertragung aufwickelt,
- Mittel (11, 12, 13) zum Führen und Steuern der Spannung des Laminats zwischen der ersten und der zweiten Spule,
- motorisierte Mittel zum relativen Bewegen einer von den ersten und zweiten Backen zwischen der ersten und der zweiten Position,
**dadurch gekennzeichnet, dass** sie ferner Folgendes umfasst: Mittel (6) zum Bewegen des Laminats in Längsrichtung und waagerecht über eine bestimmte Strecke auf beiden Seiten einer Übertragungsposition; und mechanische Mittel (7), die auf beiden Seiten der Backen angeordnet sind, um das mit der Übertragungsschicht überzogene Substrat von dem Laminat abzulösen, so dass es zur Ebene des Laminats rechtwinklig gerichtete Kräfte sind, welche die Ablösung bewirken.

2. Maschine nach Anspruch 1, **dadurch gekennzeichnet, dass** die Mittel zum Ablösen des Substrats mindestens ein Element nach Art eines Messers (7) umfassen, das rechtwinklig zur Laufrichtung des Laminats angeordnet ist und aus mindestens einer Kante (70) besteht, die durch die Kreuzung einer ersten Ebene (71) parallel zur Ebene der Backen und einer zweiten Ebene (72), die gegenüber der ersten Ebene ausgerichtet ist, definiert ist, so dass die Kante vorsteht.

3. Maschine nach Anspruch 2, **dadurch gekennzeichnet, dass** das Element nach Art eines Messers (7) in Längsnähe eines der Ränder einer der Backen (1, 2) angeordnet ist, und dass es gegenüber den Bewegungsmitteln oder den Führungsmitteln des Laminats angeordnet ist, um das Laminat an der Kante um einen Winkel zwischen ungefähr 45° und 90° abzulenken.

4. Maschine nach einem der vorhergehenden Ansprüche, **dadurch gekennzeichnet, dass** die Mittel zum Bewegen des Laminats auf beiden Seiten der Übertragungsposition zwei Zylinder (61, 62) umfassen, von denen einer motorisiert ist, zwischen denen das Laminat verschoben wird, das durch Kontakt mit mindestens einem der Zylinder mitgenommen wird.

5. Maschine nach Anspruch 1, **dadurch gekennzeichnet, dass** die Gesamtfläche des Substrats im Wesentlichen der gemeinsamen Oberfläche der ersten und zweiten Backen entspricht, die gegenüberliegend angeordnet sind.

6. Maschine nach einem der vorhergehenden Ansprüche, **dadurch gekennzeichnet, dass** sie ferner mindestens eine Zelle (5) umfasst, die dazu gedacht ist, die Position des Laminats gegenüber dem Substrat vor der Übertragung zu markieren.

7. Maschine nach Anspruch 6, **dadurch gekennzeichnet, dass** die Zelle (5) mit Mitteln zum Steuern der Bewegung und/oder der Spannung des Laminats zusammenwirkt.

8. Maschine nach einem der vorhergehenden Ansprüche, **dadurch gekennzeichnet, dass** sie ferner Mittel zum Regeln der Erwärmung mindestens einer der Backen mit Bezug auf Temperatur und/oder Dauer umfasst.

9. Maschine nach einem der vorhergehenden Ansprüche, **dadurch gekennzeichnet, dass** sie ferner Mittel zum Regeln des Anpressdrucks zwischen den ersten und zweiten Backen umfasst.

10. Maschine nach einem der vorhergehenden Ansprüche, **dadurch gekennzeichnet, dass** sie ferner Mittel zum Steuern und/oder Regeln der Laufgeschwindigkeit des Laminats umfasst.

11. Maschine nach einem der vorhergehenden Ansprüche, **dadurch gekennzeichnet, dass** die Oberfläche mindestens einer der Backen, die gegenüber der anderen Oberfläche angeordnet ist, mit Höckern (25) und/oder Ausstülpungen und/oder Vertiefungen versehen ist.

12. Maschine nach einem der vorhergehenden Ansprüche, **dadurch gekennzeichnet, dass** die Oberfläche mindestens einer der Backen, die gegenüber der anderen Oberfläche angeordnet ist, spezifische Funktionszonen (26, 27) aufweist.

13. Verfahren zum Warmübertragen unter Druck zwischen einer ersten und einer zweiten Backe mindestens einer so genannten Übertragungsschicht, die anfänglich Teil eines Laminat ist, das anfänglich um eine erste Spule gewickelt ist, auf ein im Wesentlichen flaches Substrat, **dadurch gekennzeichnet, dass** es darin besteht, die Schicht, nachdem sie auf das Substrat geklebt wurde, durch Scherung abzulösen, wobei das Ablösen durch ein abwechselndes Bewegen des Substrats gegenüber einer vorstehenden Kante von mindestens zwei Elementen erzielt wird, die auf beiden Seiten der Backen in Kontakt mit dem Laminat angeordnet sind, das nach der Übertragung um eine zweite Spule gewickelt wird.

## Claims

1. Machine for transferring, at high temperature and under pressure, at least one layer, known as a transfer layer, that is a constituent part of a multilayer laminate, said transfer layer being intended in particular for the protection of a flat substrate (100), comprising:
- a press constituted of a first (1) and of a second (2) flat jaws arranged horizontally and mobile vertically in relation to each other between a first position arranging a space between them and a second position where their facing surfaces are in contact, with at least one of said jaws producing heat
- at least one first motorised reel (3) around which said laminate is initially wound, a second reel (4) around which said laminate is wound after the transfer
- means (11, 12, 13) for guiding and controlling the tension of said laminate between said first and said second reel
- motorised means for the relative displacement of one of said first or second jaw, between said first and said second position
**characterised in that** it further comprises: means (6) for displacing the laminate longitudinally and horizontally over a given distance on either side of a transfer position; and mechanical means (7) arranged on either side of said jaws in order to detach said substrate covered with said transfer layer with regards to the laminate so that forces orientated perpendicularly to the plane of the laminate create said detachment.

2. Machine according to claim 1 **characterised in that** said means for detaching the substrate include at least one element of the knife type (7) arranged perpendicularly to the direction of travel of the laminate, and constituted of at least one edge (70) defined by the intersection of a first plane (71) parallel to the plane of the jaws and of a second plane (72) oriented with regards to the first plane in such a way that the edge is sharp.

3. Machine according to claim 2 **characterised in that** the element of the knife type (7) is arranged in the longitudinal vicinity of one of the edges of one of the jaws (1, 2) and **in that** it is arranged with regards to said means for displacing or said means for guiding the laminate in such a way as to deviate the laminate on said edge by an angle between about 45° and 90°.

4. Machine as claimed in any preceding claim **characterised in that** said means for displacing the laminate on either side of the transfer position include two cylinders (61, 62) of which one is motorised, between which is displaced said laminate which is driven by contact by at least one of said cylinders.

5. Machine according to claim 1 **characterised in that** the total surface of said substrate correspond substantially to the joint surface of the first and of the second jaws placed facing.

6. Machine as claimed in any preceding claim **characterised in that** it further comprises at least one cellule (5) intended to locate the position of said laminate with regards to the substrate before the transfer.

7. Machine according to claim 6 **characterised in that** said cellule (5) cooperates with means for controlling the displacement and/or the tension of the laminate.

8. Machine as claimed in any preceding claim **characterised in that** it further comprises means for adjusting the heating of at least one of said jaws, in temperature and/or in duration.

9. Machine as claimed in any preceding claim **characterised in that** it further comprises means for adjusting the application pressure between the first and the second jaw.

10. Machine as claimed in any preceding claim **characterised in that** it further comprises means for controlling and/or adjusting the speed of travel of said laminate.

11. Machine as claimed in any preceding claim **characterised in that** the surface of at least one of said jaws placed facing the other surface is provided with bosses (25) and/or protuberances and/or recesses.

12. Machine as claimed in any preceding claim **characterised in that** the surface of at least one of said jaws placed facing the other surface has specific functional zones (26, 27).

13. Method for transferring at a high temperature and under pressure between a first and a second jaw, of at least one transfer layer being initially part of a laminate initially wound around a first reel, over a substantially flat substrate **characterised in that** it consists in detaching by shearing said layer once it is glued to said substrate, with the detaching being obtained by an alternating displacement of said substrate with regards to a sharp edge of at least two elements arranged on either side of said jaws in contact with said laminate which, after the transfer, is wound around a second reel.
